# EUROPÄISCHE PATENTSCHRIFT

(11) **EP 2 993 076 B1**
(45) Veröffentlichungstag und Bekanntmachung des Hinweises auf die Patenterteilung: **16.10.2019**
(21) Anmeldenummer: 15176629.2
(22) Anmeldetag: 14.07.2015
(51) Int. Cl.: B60N 2/68, B60N 2/225

(54) **BESCHLAG UND FAHRZEUGSITZ**
FITTING AND VEHICLE SEAT
ARMATURE ET SIEGE DE VEHICULE

(30) Priorität: 26.08.2014 DE 102014216952
(43) Veröffentlichungstag der Anmeldung: 09.03.2016
(73) Patentinhaber: Sitech Sitztechnik GmbH, 38442 Wolfsburg (DE)
(72) Erfinder: Barkow, Tomas, 38102 Braunschweig (DE); von Trzebiatowski, Jürgen, 38120 Braunschweig (DE)
(74) Vertreter: Wöhltjen, Karsten

(56) Entgegenhaltungen:
- DE-A1- 4 129 515
- DE-A1-102010 043 626
- FR-A1- 2 962 385
- FR-A1- 2 962 945

## Beschreibung

Die Erfindung betrifft einen Beschlag und einen Fahrzeugsitz.

Fahrzeugsitze mit einer Rückenlehnenverstellung oder Lehnenneigungsverstellung weisen ein Getriebe, oftmals als Taumelgetriebe ausgeführt, zur Verstellung der Rückenlehne auf. Das Getriebe umfasst zumeist ein innenverzahntes Hohlrad und ein außenverzahntes Stirnrad.

Bei einem Front- oder Heckcrash entstehen die größten Belastungen im Beschlag um die Beschlagachse, die quer zur Fahrtrichtung (Y-Richtung) verläuft. Dabei greifen die Verzahnungen von Hohlrad und Stirnrad ineinander. Je besser die Verzahnung im Eingriff bleibt, umso höher sind die übertragbaren Momente. Zusätzlich zu der Hauptbelastung gibt es Momente in X- und Z-Richtung, die durch das Verformen und Einknicken der Sitzstruktur hervorgerufen werden. Diese Momente verdrehen das Stirnrad in dem Hohlrad und dabei wird die Verzahnung teilweise aus dem Eingriff geschoben. Deshalb hat dieses Hohlrad eine axiale Sicherung, die die Verzahnung im Eingriff halten soll. Die axiale Sicherung besteht üblicherweise aus einem ringförmigen Blech. Bei stärkeren Unfällen hat sich gezeigt, dass sich das Axialsicherungsblech zumindest teilweise aufbiegt, so dass die Verzahnung zumindest nicht mehr vollständig im Eingriff ist.

DE 28 34 529 C2 offenbart einen Gelenkbeschlag für Sitze mit verstellbarer Rückenlehne, wobei ein Lagerschild als Axialsicherung vorgesehen ist. Das Lagerschild hat zwei einander diametral gegenüberliegende Abwinklungen, die bei axialer Zusammendrückung mit einer vorbestimmten Kraft an ihren Stirnseiten mit einem Beschlagteil verschweißt sind.

DE 10 2011 113 748 A1 beschreibt ein Verfahren zur Herstellung eines Fahrzeugsitz-Beschlages, bei dem eine Gleitlagerbuchse in axialer Richtung in einer Aufnahme eines ersten Beschlagteils eingepresst wird, wobei die eingepresste Gleitlagerbuchse einen radial abstehenden Sicherungsbereich aufweist.

DE 10 2011 075 183 A1 offenbart einen Antrieb für eine Verstelleinrichtung eines Kraftfahrzeugsitzes mit einem Antriebsmotor und einem zweistufigen Untersetzungsgetriebe auf. Eine flache Abdeckscheibe ist zur Abstützung der Getriebeelemente in axialer Richtung vorgesehen.

Die Druckschrift FR 2 962 385 A1 erläutert einen Beschlagmechanismus, der eine schraubenförmige Bremsfeder umfasst, die aus einer Spule mit Windungen gebildet ist, die sich zwischen den Endarmen durch Drehen in einer Winkelrichtung von einem Arm zu einem anderen Arm erstrecken. Die Spule ist mit Reibung in einem zylindrischen Drehkranz gelagert. Eine starre Exzenternocke weist eine Halbnocke und eine andere Halbnocke auf, die jeweils die Arme in der Richtung und einer anderen Winkelrichtung zurückdrücken, wenn sich die Exzenternocke in den entsprechenden Richtungen dreht, ohne von einer Einlasssteuereinheit angetrieben zu werden. Die Spule ist dabei gegenüber dem Exzenternocken axial versetzt.

Zum Stand der Technik gehören ferner die Druckschriften DE 10 2010 043 626 A1, FR 2962945 A1 und DE 41 29 515A1.

Der Erfindung liegt nun die Aufgabe zugrunde, die Crashsicherheit zu erhöhen.

Diese Aufgabe wird erfindungsgemäß mit den Merkmalen der Ansprüche 1 beziehungsweise 9 gelöst. Vorteilhafte Ausgestaltungen der Erfindung sind in den Unteransprüchen vorgeschlagen.

Ausgangspunkt der Erfindung ist ein Beschlag , insbesondere ein Lehneneinstellbeschlag für einen Fahrzeugsitz, umfassend ein erstes Beschlagteil, an welchem ein Hohlrad mit Innenverzahnung angeordnet ist, ein relativ zum ersten Beschlagteil um eine axiale Längsachse des Beschlages verdrehbares zweites Beschlagteil, an welchem ein in das Hohlrad eingreifendes Stirnrad angeordnet ist, und eine an dem Hohlrad befestigte ringförmige Axialsicherung, wobei das Stirnradzwischen dem Hohlrad und der Axialsicherung in axialer Richtung gesichert ist, wobei die Axialsicherung und das Hohlrad einen sich in axialer Richtung einer Rotationsachse erstreckenden Innenraum bilden, der von der Rotationsachse des Lehneneinstellbeschlages beabstandet ist, wodurch der Innenraum innerhalb des Lehneneinstellbeschlages eine in axialer Richtung anlagefreie Aufnahme des Stirnrades erlaubt.

Erfindungsgemäß ist vorgesehen, dass die Versteifungsstruktur der Axialsicherung an einem inneren Radius oder in einer Kreisringfläche der Axialsicherung ausgebildet ist, wobei die Versteifungsstruktur auf der dem Stirnrad abgewandten Seite angeordnet ist.

Die Axialsicherung bietet eine erhöhte Lastaufnahme bei einem Unfall oder Crash. Dies wird dadurch erreicht, dass die Versteifungsstruktur die Steifigkeit der Axialsicherung in axialer Richtung erhöht. Anders ausgedrückt, wird das Flächenträgheitsmoment der Axialsicherung durch die Versteifungsstruktur erhöht. Somit kann die Steifigkeit der Axialsicherung ohne eine erhöhte Blechdicke erhöht werden, so dass im Crashfall die Verzahnung besser im Eingriff bleibt.

Die Versteifungsstruktur kann an einem inneren Radius der Axialsicherung angeordnet sein. Diese Anordnung der Versteifungsstruktur ist besonders wirkungsvoll, da die Axialsicherung üblicherweise an ihrem äußeren Radius zum Beispiel durch Verschweißen an dem Hohlrad befestigt ist, so dass die Axialsicherung nun an beiden Enden versteift ist.

Die Versteifungsstruktur kann roationssymmetrisch zur Beschlagachse sein. Dadurch erhöht sich die Steifigkeit beziehungsweise das Flächenträgheitsmoment der Axialsicherung symmetrisch über den ganzen Umfang, so dass es keine Vorzugsrichtung gibt. Somit wird die Crashsicherheit über dem gesamten Winkelbereich verbessert. Alternativ kann die Versteifungsstruktur bereichsweise vorgesehen sein, um gezielt gewisse Winkelbereiche zu verstärken.

Die Versteifungsstruktur kann einen abgewinkelten Kragen aufweisen. Diese Struktur ist einfach zu fertigen, beispielsweise durch einen Präge- oder Stanzvorgang und bietet eine hohe Steifigkeit.

Die Versteifungsstruktur kann eine Sicke aufweisen. Auch die Sicke bietet bei einfacher Herstellung eine hohe Steifigkeit.

Die Versteifungsstruktur kann einstückig mit der Axialsicherung ausgebildet sein. Dies ermöglicht eine einfache Herstellung. So kann beispielsweise bei einem Stanzen der Axialsicherung die Versteifungsstruktur direkt mit erzeugt werden.

Die Versteifungsstruktur kann an der Axialsicherung befestigt sein. Auf diese Weise kann die Versteifungsstruktur durch einen zusätzlichen Fügevorgang, beispielsweise durch Auflöten oder Aufschweißen an der Axialsicherung befestigt werden. Dies kann vorteilhaft sein, wenn zum Beispiel unterschiedliche Materialien für die Axialsicherung und die Versteifungsstruktur gewünscht sind.

Der Axialsicherung kann aus einem Blech bestehen. Metallisches Blech bietet bereits eine gute Grundsteifigkeit und kann auf einfache Art und Weise, beispielsweise durch Schweißen, mit üblicherweise metallischen Bestandteilen des Beschlages verbunden werden.

Der erfindungsgemäße Fahrzeugsitz umfasst ein Sitzteil und eine verstellbare Rückenlehne sowie einen Beschlag, wie zuvor beschrieben. Es gelten die gleichen Vorteile und Modifikationen wie zuvor beschrieben.

Das erste Beschlagteil kann an der Rückenlehne angeordnet sein und das zweite Beschlagteil kann an dem Sitzteil angeordnet sein. Diese Anordnung erlaubt eine gute Kraftübertragung und Stabilität.

Die verschiedenen in dieser Anmeldung genannten Ausführungsformen der Erfindung sind, sofern im Einzelfall nicht anders ausgeführt, vorteilhaft miteinander kombinierbar.

Die Erfindung wird nachfolgend in Ausführungsbeispielen anhand der zugehörigen Zeichnungen erläutert. Es zeigen:
- Figur 1: einen erfindungsgemäßen Fahrzeugsitz mit Beschlag in Explosionsdarstellung;
- Figur 2: eine Schnittdarstellung des Beschlages;
- Figur 3: eine perspektivische Schnittdarstellung des Beschlages;
- Figur 4: ein erstes Ausführungsbeispiel einer Axialsicherung des Beschlages;
- Figur 5: ein zweites Ausführungsbeispiel einer Axialsicherung des Beschlages; und
- Figur 6: ein drittes Ausführungsbeispiel einer Axialsicherung des Beschlages.

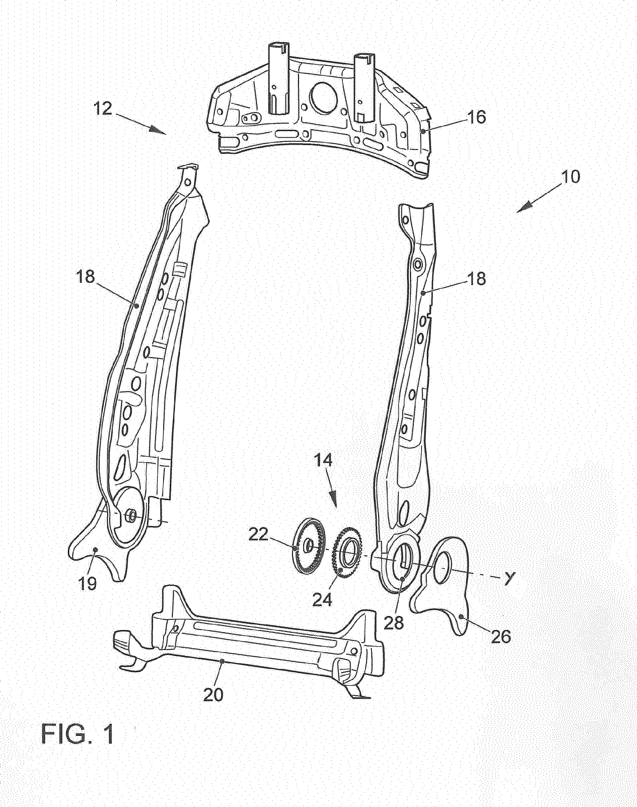

Figur 1 zeigt einen erfindungsgemäßen Fahrzeugsitz 10 beziehungsweise genauer gesagt dessen Rückenlehne 12. Von der Rückenlehne 12 ist eine tragende Struktur dargestellt. Die Rückenlehne 12 ist an einem nicht dargestellten Sitzteil, das zum Beispiel mittels eines Verschiebemechanismus an der Fahrzeugkarosserie verankert ist, befestigt. Die Rücklehne 12 kann um eine Drehachse Y gegenüber dem Sitzteil verstellt, das heißt verschwenkt oder geneigt werden. Dazu ist die Rückenlehne 12 über zwei Beschläge 14 mit dem Sitzteil verbunden.

Die hier in einer Explosionsdarstellung beispielhaft dargestellte Rückenlehne 12 umfasst ein Kopfblech oder eine obere Quertraverse 16, zwei Seitenteile oder Seitenschwerter 18 und ein unteres Querblech oder eine untere Quertraverse 20. Die Einzelteile der Rückenlehne 12 werden beispielsweise durch Verschweißen zusammengefügt.

Wenn im Folgenden auf den Beschlag 14 Bezug genommen wird, gilt die Beschreibung sowohl für den linken Beschlag, der im Bereich des linken Seitenteils 18 angeordnet ist, als auch für den rechten Beschlag, der im Bereich des rechten Seitenteils 18 angeordnet ist. Der linke Beschlag und der rechte Beschlag können identisch oder seitenverkehrt ausgebildet sein.

Der Beschlag 14 umfasst unter anderem ein Hohlrad 22 und ein Stirnrad 24. Das Hohlrad 22 ist einem Seitenteil 18 zugeordnet beziehungsweise wird an dem Seitenteil befestigt. Damit ist das Hohlrad 22 lehnenteilfest. Das Stirnrad 24 ist dem nicht dargestellten Sitzteil zugeordnet, das heißt es wird mit diesem verbunden. Damit ist das Stirnrad 24 sitzteilfest. Das Hohlrad 22 mit seiner Innenverzahnung und das Stirnrad 24 mit seiner Außenverzahnung greifen ineinander ein.

Das Hohlrad 22 wird über ein nicht dargestelltes erstes Beschlagteil mit der Rückenlehne 12 verbunden. Das Stirnrad 24 wird über ein zweites Beschlagteil 26 mit dem Sitzteil verbunden. Anstelle der Beschlagteile können Adapterteile verwendet werden. Auch ist es möglich, dass ein oder beide Räder 22, 24 direkt an Elementen des Sitzes befestigt werden. Dann sind die Räder 22, 24 gewissermaßen die Beschlagteile. Der Beschlag 14 liegt demnach im Kraftfluss zwischen der Lehne 12 und dem Sitzteil, weshalb das Hohlrad 22 und das Stirnrad 24 vorzugsweise aus Metall bestehen.

Das linke Seitenteil 18 und auch das rechte Seitenteil 18 weisen in einem unteren Bereich, das heißt im Bereich des Beschlages 14, eine Durchgangsöffnung 28 auf. Die Durchgangsöffnung 28 ist konzentrisch zu der Drehachse beziehungsweise Beschlagachse Y ausgebildet und in der Größe derart bemessen, dass ein Teil des Stirnrades 24 und/oder ein Teil des zweiten Beschlagteils 26 aufgenommen werden können. Des Weiteren verläuft im montierten Zustand des Fahrzeugsitzes 10 eine hier nicht dargestellte Übertragungsstange durch die Durchgangsöffnung 28. Die Übertagungsstange verbindet die beiden Beschläge 14 miteinander.

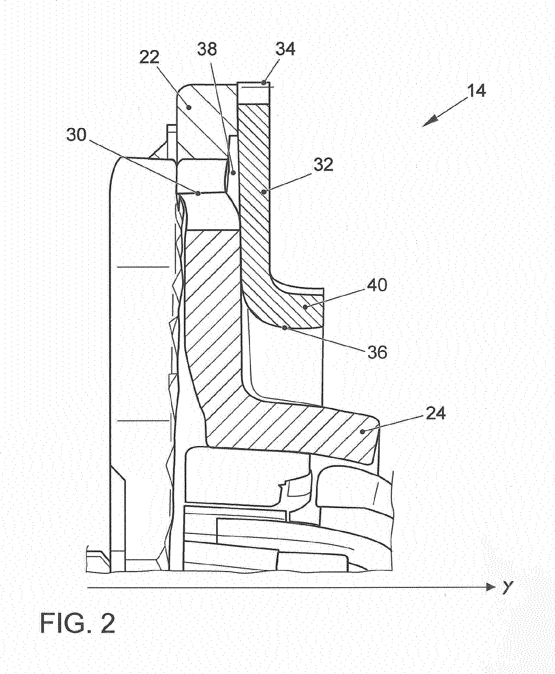

In Figur 2 ist eine Schnittdarstellung des Beschlages 14 dargestellt. Das Hohlrad 22 und das Stirnrad 24 greifen in einer Verzahnung 30 in einander ein. Es ist eine Axialsicherung 32 vorgesehen. Die Axialsicherung 32 ist mit einem äußeren Radius 34 beziehungsweise äußeren Umfang an dem Hohlrad 22 befestigt, beispielsweise verschweißt. Die Axialsicherung 32 und das Hohlrad 22 bilden einen Innenraum 38, der von der Rotationsachse Y oder Längsachse beabstandet ist. Der Innenraum 38 hat eine Erstreckung in axialer Richtung Y, die eine Aufnahme des Stirnrades 24 erlaubt. Das Stirnrad 24 ist im Normalfall ohne Anlage in axialer Richtung Y in dem Innenraum 38 angeordnet. Hier in Figur 2 ist ein Crashfall dargestellt, bei dem der Beschlag 24 erheblichen Kräften und Momenten ausgesetzt ist. Dies führt zu einer Verformung und Bewegung des Stirnrades 24, so dass dieses an der Axialsicherung 32 anliegt. Die radiale Abmessung des Innenraumes 38 ist zumindest derart, dass die Verzahnung 30 in dem Innenraum 38 liegt. Über die Größe des inneren Radius 36 der Axialsicherung 32, dass heißt dem Abstand von der Drehachse Y bis zu dem inneren Radius 36 kann die radiale Erstreckung des Innenraumes 38 eingestellt werden.

An dem inneren Radius 36 hat die Axialsicherung 32 eine Versteifungsstruktur 40 in Form eines abgewinkelten Kragens. Der Kragen verläuft hierbei parallel zu der Rotationsachse Y. Der Kragen befindet sich auf der dem Stirnrad 24 abgewandten Seite, so dass keine Beeinträchtigung der Bewegung des Stirnrades 24 stattfindet.

Die Versteifungsstruktur 40 erhöht die Steifigkeit der Axialsicherung 32 in Richtung der Rotationsachse Y. Somit kann die Axialsicherung 32 in dem in Figur 2 dargestellten Crashfall höhere Kräfte in axialer Richtung aufnehmen. Dies bewirkt, dass die Verzahnung 30 zur Übertragung von Kräften und Momenten länger im Eingriff bleibt.

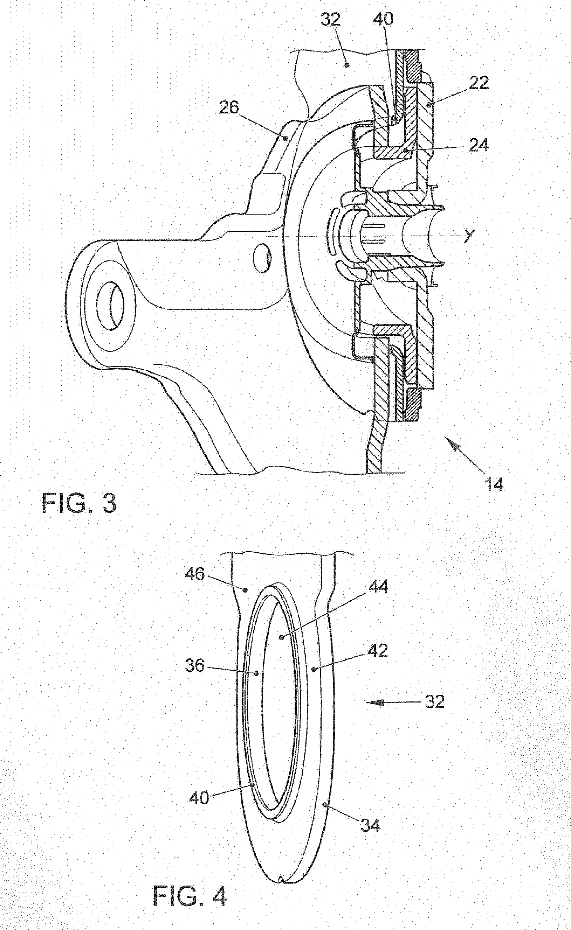

In Figur 3 ist der Beschlag 14 perspektivisch dargestellt. Das Stirnrad 24 befindet sich zumindest in teilweisem Eingriff mit der Verzahnung des Hohlrades 22. Die Axialsicherung 32 ist an ihrem äußeren, dass heißt radial außen liegenden Ende, mit dem Hohlrad 22 fest verbunden. An dem freien, innen liegenden, das heißt, radial innerem Ende, ist die Versteifungsstruktur 40 angeordnet. Die Versteifungsstruktur 40 ist frei von dem zweiten Beschlagteil 26, so dass eine Relativbewegung zwischen den beiden Elementen möglich ist.

In Figur 4 ist ein erstes Ausführungsbeispiel der Axialsicherung 32 dargestellt. Die Axialsicherung 32 hat im Wesentlichen die Form einer Axialsicherung mit einem äußeren Radius 34 und einem inneren Radius 36. Die beiden Radien 34, 36 begrenzen eine Axialsicherungsfläche 42. Der innere Radius 36 umschließt eine Öffnung 44, durch welche Teile des Stirnrades 24 und weitere Elemente des Beschlages 14 verlaufen. Die Kreisringfläche 42 hat eine kleinere radiale Erstreckung als die Öffnung 44. Dies erlaubt eine Gewichts- und Materialersparnis.

In einem Bereich des äußeren Radius 34 ist ein Befestigungsbereich 46 zur Befestigung der Axialsicherung 32 an dem Seitenschwert 18 angeordnet. Bis auf den optionalen Befestigungsbereich 46 hat die Axialsicherung 32 die Form einer rotationssymmetrischen Axialsicherung. Auch die Versteifungsstruktur 40 ist hier rotationssymmetrisch ausgeführt. Alternativ kann die Versteifungsstruktur 40 lediglich bereichs- oder abschnittsweise ausführt sein. In diesem Fall verläuft die Versteifungsstruktur nicht über dem gesamten Umfang.

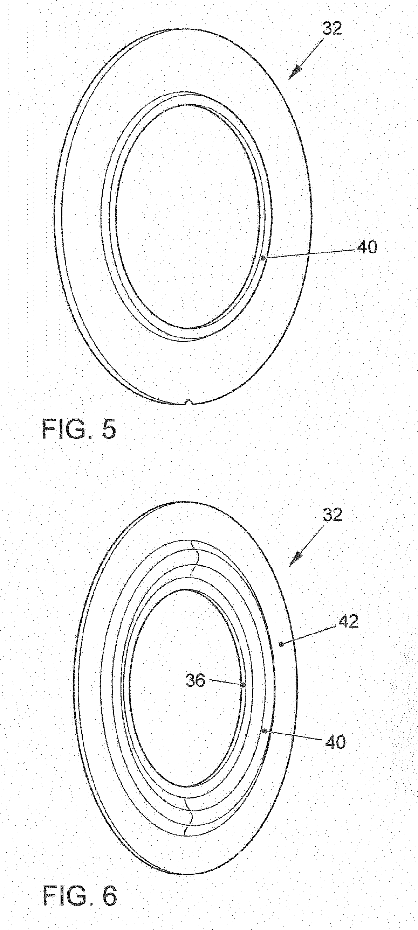

In Figur 5 ist ein weiteres Ausführungsbeispiel der Axialsicherung 32 dargestellt. Diese Axialsicherung 32 entspricht im Wesentlichen der in Figur 4 dargestellten Axialsicherung. Hier in Figur 5 ist der Befestigungsbereich aus Figur 4 nicht vorgesehen, so dass die Axialsicherung 32 die Form eines Kreisrings aufweist.

In Figur 6 ist ein weiteres Ausführungsbeispiel der Axialsicherung 32 dargestellt. Hier ist die Versteifungsstruktur 40 als Sicke oder Vertiefung ausgebildet. Zudem befindet sich die Versteifungsstruktur 40 nicht an dem inneren Radius 36, sondern in der Kreisringfläche 42 der Axialsicherung 32.

Die in den Figuren dargestellten Ausführungsbeispiele der Axialsicherung 32 beziehungsweise der Versteifungsstrukturen 40 können miteinander kombiniert werden. So ist es beispielsweise möglich, dass eine Versteifungsstruktur in Form eines Kragens oder einer anderen Erhebung auch auf der Kreisringfläche 42 angeordnet ist, wie die Sicke in Figur 6.

Die Versteifungsstruktur 40 ist in den Figuren einteilig dargestellt. Alternativ kann die Versteifungsstruktur 40 aus mehreren einzelnen Teilen oder Elementen bestehen. Zum Beispiel können mehrere, konzentrisch verlaufende Versteifungspunkte vorgesehen sein, die sich vorzugsweise vom äußeren Radius 34 bis zum inneren Radius 36 erstrecken.

### Bezugszeichenliste

- 10: Fahrzeugsitz
- 12: Rückenlehne
- 14: Beschlag
- 16: obere Quertraverse
- 18: Seitenschwert
- 20: untere Quertraverse
- 22: Hohlrad
- 24: Stirnrad
- 26: zweites Beschlagteil
- 28: Durchgangsöffnung
- 30: Verzahnung
- 32: Axialsicherung
- 34: äußerer Radius
- 36: innerer Radius
- 38: Innenraum
- 40: Versteifungsstruktur
- 42: Kreisringfläche
- 44: Öffnung
- 46: Befestigungsbereich
- Y: Rotationsachse

## Patentansprüche

1. Beschlag, insbesondere Lehneneinstellbeschlag für einen Fahrzeugsitz (10), umfassend ein erstes Beschlagteil, an welchem ein Hohlrad (22) mit Innenverzahnung angeordnet ist, ein relativ zum ersten Beschlagteil um eine axiale Längsachse (Y) des Beschlages (14) verdrehbares zweites Beschlagteil (26), an welchem ein in das Hohlrad (22) eingreifendes Stirnrad (24) angeordnet ist, und eine an dem Hohlrad (22) befestigte ringförmige Axialsicherung (32), wobei das Stirnrad (24) zwischen dem Hohlrad (22) und der Axialsicherung (32) in axialer Richtung (Y) gesichert ist, wobei die Axialsicherung (32) und das Hohlrad (22) einen sich in axialer Richtung einer Rotationsachse (Y) erstreckenden Innenraum (38) bilden, der von der Rotationsachse (Y) des Lehneneinstellbeschlages beabstandet ist, wodurch der Innenraum (38) innerhalb des Lehneneinstellbeschlages eine in axialer Richtung anlagefreie Aufnahme des Stirnrades (24) erlaubt, **dadurch gekennzeichnet, dass** die Versteifungsstruktur (40) der Axialsicherung (32) an einem inneren Radius (36) oder in einer Kreisringfläche (42) der Axialsicherung ausgebildet ist, wobei die Versteifungsstruktur (40) auf der dem Stirnrad (24) abgewandten Seite angeordnet ist.

2. Beschlag nach Anspruch 1, **dadurch gekennzeichnet, dass** die Versteifungsstruktur (40) an einem inneren Radius (36) der Axialsicherung (32) angeordnet ist.

3. Beschlag nach Anspruch 1 oder 2, **dadurch gekennzeichnet, dass** die Versteifungsstruktur (40) rotationssymmetrisch zur Längsachse (Y) ist.

4. Beschlag nach einem der Ansprüche 1 bis 3, **dadurch gekennzeichnet, dass** die Versteifungsstruktur (40) einen abgewinkelten Kragen aufweist.

5. Beschlag nach einem der Ansprüche 1 bis 4, **dadurch gekennzeichnet, dass** die Versteifungsstruktur (40) eine Sicke aufweist.

6. Beschlag nach einem der Ansprüche 1 bis 5, **dadurch gekennzeichnet, dass** die Versteifungsstruktur (40) einstückig mit der Axialsicherung (32) ausgebildet ist.

7. Beschlag nach einem der Ansprüche 1 bis 5, **dadurch gekennzeichnet, dass** die Versteifungsstruktur (40) an der Axialsicherung (32) befestigt ist.

8. Beschlag nach einem der Ansprüche 1 bis 7, **dadurch gekennzeichnet, dass** die Axialsicherung (32) aus einem Blech besteht.

9. Fahrzeugsitz mit einem Sitzteil und einer verstellbaren Rückenlehne (12), **gekennzeichnet durch** einen Beschlag (14) nach einem der Ansprüche 1 bis 8.

10. Fahrzeugsitz nach Anspruch 9, **dadurch gekennzeichnet, dass** das erste Beschlagteil an der Rückenlehne (12) angeordnet ist und dass das zweite Beschlagteil (26) an dem Sitzteil angeordnet ist.

## Claims

1. A fitting, in particular a backrest adjustment fitting for a vehicle seat (10), comprising a first fitting part, on which an internal geared wheel (22) with an internal tooth system is arranged, a second fitting part (26) rotatable relative to the first fitting part around an axial longitudinal axis (Y) of the fitting (14), on which fitting part a spur wheel (24) engaging in the internal geared wheel (22) is arranged, and a ring-shaped axial securing means (32) fastened to the internal geared wheel (22), wherein the spur wheel (24) is secured in the axial direction (Y) between the internal geared wheel (22) and the axial securing means (32), wherein the axial securing means (32) and the internal geared wheel (22) form an interior (38) extending in the axial direction of the axis of rotation (Y), which interior is spaced apart from the axis of rotation (Y) of the backrest adjustment fitting, whereby the interior (38) permits an installation-free accommodation of the spur wheel (24) within the backrest adjustment fitting in the axial direction, **characterized in that** the stiffening structure (40) of the axial securing means (32) is formed on an internal radius (36) or in an annular surface (42) of the axial securing means, wherein the stiffening structure (40) is arranged on the side facing away from the spur wheel (24).

2. The fitting according to Claim 1, **characterized in that** the stiffening structure (40) is arranged on an internal radius (36) of the axial securing means (32).

3. The fitting according to Claim 1 or 2, **characterized in that** the stiffening structure (40) is rotationally symmetrical to the longitudinal axis (Y).

4. The fitting according to any one of Claims 1 to 3, **characterized in that** the stiffening structure (40) has an angled collar.

5. The fitting according to any one of Claims 1 to 4, **characterized in that** the stiffening structure (40) has a corrugation.

6. The fitting according to any one of Claims 1 to 5, **characterized in that** the stiffening structure (40) is formed in one piece with the axial securing means (32).

7. The fitting according to any one of Claims 1 to 5, **characterized in that** the stiffening structure (40) is fastened to the axial securing means (32).

8. The fitting according to any one of Claims 1 to 7, **characterized in that** the axial securing means (32) consists of a sheet metal.

9. A vehicle seat with a seat part and an adjustable backrest (12), **characterized by** a fitting (14) according to any one of Claims 1 to 8.

10. The vehicle seat according to Claim 9, **characterized in that** the first fitting part is arranged on the backrest (12) and that the second fitting part (26) is arranged on the seat part.

## Revendications

1. Ferrure, en particulier ferrure de réglage de dossier pour un siège de véhicule (10), comprenant une première partie de ferrure sur laquelle est disposée une roue creuse (22) avec denture intérieure, une deuxième partie de ferrure (26) pouvant tourner relativement à la première partie de ferrure autour d'un axe longitudinal (Y) axial de la ferrure (14) et sur laquelle est disposée une roue dentée droite (24) engrenant dans la roue creuse (22), et un blocage axial (32) de forme annulaire fixé sur la roue creuse (22), la roue dentée droite (24) étant bloquée dans la direction axiale (Y) entre la roue creuse (22) et le blocage axial (32), le blocage axial (32) et la roue creuse (22) formant un espace intérieur (38) qui s'étend dans la direction axiale d'un axe de rotation (Y) et qui est espacé de l'axe de rotation (Y) de la ferrure de réglage de dossier, ce qui fait que l'espace intérieur (38) permet à l'intérieur de la ferrure de réglage de dossier une réception sans appui de la roue dentée droite (24) dans la direction axiale, **caractérisée en ce que** la structure de rigidification (40) du blocage axial (32) est constituée sur un rayon intérieur (36) ou dans une surface en anneau de cercle (42) du blocage axial, la structure de rigidification (40) étant disposée sur le côté éloigné de la roue dentée droite (24).

2. Ferrure selon la revendication 1, **caractérisée en ce que** la structure de rigidification (40) est disposée sur un rayon intérieur (36) du blocage axial (32).

3. Ferrure selon la revendication 1 ou 2, **caractérisée en ce que** la structure de rigidification (40) est en symétrie de rotation par rapport à l'axe longitudinal (Y).

4. Ferrure selon l'une des revendications 1 à 3, **caractérisée en ce que** la structure de rigidification (40) comporte une collerette coudée.

5. Ferrure selon l'une des revendications 1 à 4, **caractérisée en ce que** la structure de rigidification (40) comporte une moulure.

6. Ferrure selon l'une des revendications 1 à 5, **caractérisée en ce que** la structure de rigidification (40) est constituée d'une seule pièce avec le blocage axial (32).

7. Ferrure selon l'une des revendications 1 à 5, **caractérisée en ce que** la structure de rigidification (40) est fixée sur le blocage axial (32).

8. Ferrure selon l'une des revendications 1 à 7, **caractérisée en ce que** le blocage axial (32) se compose d'une tôle.

9. Siège de véhicule avec une partie d'assise et un dossier (12) réglable, **caractérisé par** une ferrure (14) selon l'une des revendications 1 à 8.

10. Siège de véhicule selon la revendication 9, **caractérisé en ce que** la première partie de ferrure est disposée sur le dossier (12) et **en ce que** la deuxième partie de ferrure (26) est disposée sur la partie d'assise.
